# EUROPEAN PATENT SPECIFICATION

(11) **EP 1 728 856 B1**
(45) Date of publication and mention of the grant of the patent: **13.05.2009**
(21) Application number: 06114703.9
(22) Date of filing: 30.05.2006
(51) Int. Cl.: C12N 5/06, G06T 7/00

(54) **A method for optically determining the dynamic behaviour of contracting muscle cells**
Verfahren zur optischen Bestimmung des dynamischen Verhaltens von kontrahierenden Zellen
Procédé de détermination optique du comportement dynamique de cellules contractantes

(30) Priority: 01.06.2005 EP 05104713
(43) Date of publication of application: 06.12.2006
(73) Proprietor: Fraunhofer-Gesellschaft zur Förderung der angewandten Forschung e.V., 80686 München (DE)
(72) Inventor: Schwarz, Ron, 40591, Düsseldorf (DE)
(74) Representative: Hilleringmann, Jochen

(56) References cited:
- EP-A- 1 302 535
- WEISENSEE D ET AL: "In vitro approach to 'uremic cardiomyopathy'." NEPHRON. 1993, vol. 65, no. 3, 1993, pages 392-400, XP008055283 ISSN: 0028-2766
- RIEHLE M ET AL: "Ouabain and digitoxin as modulators of chick embryo cardiomyocyte energy metabolism." ARZNEIMITTEL-FORSCHUNG. AUG 1994, vol. 44, no. 8, August 1994 (1994-08), pages 943-947, XP008055314 ISSN: 0004-4172
- GERVAIS-PINGOT V ET AL: "In vitro quantification by image analysis of inotropic and chronotropic effects of drugs on cultures of cardiac myocytes." CELL BIOLOGY AND TOXICOLOGY. DEC 1994, vol. 10, no. 5-6, December 1994 (1994-12), pages 297-300, XP008055282 ISSN: 0742-2091
- KOROHODA W ET AL: "A new model for the research into rhythmic contraction activity of cardiomyocytes in vitro." BIOCHEMISTRY AND CELL BIOLOGY = BIOCHIMIE ET BIOLOGIE CELLULAIRE. 1995 JUL-AUG, vol. 73, no. 7-8, July 1995 (1995-07), pages 431-439, XP008055281 ISSN: 0829-8211
- LAU Y H ET AL: "Non-rigid image registration using a median-filtered coarse-to-fine displacement field and a symmetric correlation ratio." PHYSICS IN MEDICINE AND BIOLOGY. APR 2001, vol. 46, no. 4, April 2001 (2001-04), pages 1297-1319, XP002352958 ISSN: 0031-9155

## Description

### BACKGROUND OF THE INVENTION

### Field of the Invention

The invention is directed to a method for optically determining the dynamic behaviour of a cell culture including cardiomyocytes.

### Description of the prior art

Recent years have seen serious progress in stem cell research. Thus, stem cell based samples can be used to replace animal tests in the development of new drugs. As a substitute for experiments on explanted animal hearts, in-vitro experiments on cardiomyocytes differentiated from stem cells can be performed. The dynamic behaviour of cell cultures, i.e. the contraction behaviour of the cardiomyocytes, gives information about the toxic effect of substances added. The contraction behaviour can be studied and quantified by optical monitoring via a microscope.

There exist several approaches to determine the dynamic behaviour of contracting cells. The classical approach is based on human inspection of cells in a culture. For large scale experiments, this does no longer work and automatic approaches are required. Advanced systems use cameras to capture time sequences of images from cells in a culture. Subsequently, image analysis methods are applied to the image sequence to derive cell parameters that describe the dynamic behaviour.

In prior art, substances are examined for their cardiotoxicity by making experiments on Langendorff preparations. Here, an animal heart is explanted and perfused. Parameters such as the ventricular contraction force, the heart rate and the coronary blood flow are measured at the beating heart, and the variations of the parameters occurring when substances are administered are measured. These experiments have the great disadvantage that they require the killing of animals to obtain the hearts needed to perform the experiment. They are costly and require an elaborate preparation of animal organs.

Recent developments use methods based on cell cultures to perform cardio toxicity tests. Here, cell culture dishes are employed that are provided with a plurality of electrodes. Cardiomyocytes are cultivated in these dishes, which contract spontaneously without any external excitation. The electrodes allow to derive electric signals with which electro-physiologic parameters of the contracting cardiomyocytes can be determined (see, for example, WO-A-2004/067734). However, the contraction force of the cardiomyocytes can not be determined by this method.

Current approaches for estimation of contraction parameters look at local features detected in an image, try to identify the same feature in subsequent images, and derive movement parameters of the detected image element. In EP 1 302 535 A1 it is proposed to look at areas with low or high intensity and monitor their movements. According to the article of Weisensee D et al: In vitro Approach to 'Uremic Cardiomyopathy'. Nephron 65 (1993) 392-400 and Riehle M and Bereiter-Hahn J: Ouabain and Digitoxin as Modulators of Chick Embryo Cardiomyocyte Energy Metabolism. Arzneim.-Forsch./Drug Res. 44(II), 8 (1994) 943-947 difference images showing all pixels which have changed as an indication of movements are generated. According to Gervais-Pingot V et al: In vitro quantification by image analysis of inotropic and chronotropic effects of drugs on cultures of cardiac myocytes. Cell Biology and Toxicology 10 (1994) 297-300 optical densities of an analysed area are monitored and contraction parameters from changes in density are derived. According to Korohoda W et al: A new model for the research into rhythmic contraction activity of cardiomyocytes in vitro. Biochemistry and Cell Biology 73, 7-8 (1995) 431-439 changes of the size of a black area at a fixed position within the image sequence are considered.

The approach of the present invention uses non-rigid registration methods to compare subsequent images. These registration methods are generally used for geometric alignment of images (e.g. of electrophoresis gels with different gene expressions) or volume data from different sources (e.g. CT, MR) or at different times (e.g. pre-operative/post-operative) for comparison reasons. When computing a registration transformation, the whole image is inspected and a mapping between two images is generated which maps the whole image optimally rather than only a specific image part. When more than one image element moves, the registration approach has the advantage that all moving parts are taken in account and improve the precision for a single element whereas in local approaches other moving image elements can and will disturb the calculation of the selected element.

Some approaches for non-rigid registration use displacement fields to model image deformations and find the optimal registration transformation, e.g. Lau Y H et al.: Non-rigid image registration using median-filtered coarse-to-fine displacement field and a symmetric correlation ratio. Phys. Med.Biol. 46 (2001) 1297-1319. The displacement field, that is an intermediate means in establishing a non-rigid transformation, is the crucial result for the approach of the present invention where displacement fields are used to estimate movements in image sequences in a more stable and more precise manner than local methods can achieve.

EP-A-0414237 describes a device for analyzing the change of the shape of individual cardiomyocytes caused by contraction and a change in the intercellular concentration of calcium ions. Here, the signal of a fluorescent dye is detected optically.
The mechanical measurement of the contractility of individual cardiomyocytes is described in SU-A-1377738. Here, a mechanical fixation of individual cells is required.

### SUMMARY OF THE INVENTION

The invention allows for an optical determination of the contraction behaviour of cardiomyocytes in a cell culture. Thus, the effects of test substances on cardiomyocytes can be studied in vitro.

The invention provides a method for optically determining the dynamic behaviour of cardiomyocytes muscle cells in a cell culture, wherein
- a video sequence of the contracting muscle cells is made using a video camera,
- an image processing unit is used to calculate a displacement vector for each image element and each time step of the video sequence, said vector describing the movement of the image content in the image element, and
- at least one parameter describing the dynamic behaviour of the muscle cells is determined from the displacement vectors.

Thus, according to the invention, the movement of the contracting muscle cells is recorded with a video camera. The video camera produces a video sequence. Using image processing methods, the changes in the contracting muscle cells in each image element are determined, from which displacement vectors are calculated that describe the movement of the image content. The displacement vectors allow to obtain at least one parameter describing the dynamic behaviour of the muscle cells. This parameter may be, for example, the contraction rate, the amplitude of the displacement and/or the contractility, i.e. the force with which the muscle cells contract.

In order to determine the dynamic behaviour of the contracting muscle cells from the video sequence the video images need to be registered to a reference image which is selected from the sequence. Alternatively each two consecutive images can be registered. All images are matched using a non-rigid hierarchical registration method. The registration is based on a uniform grid which is used for sub-division of the images. The images are warped by shifting individual grid points and by interpolating the images between them. The warped images are compared to the reference image using a similarity measure (e.g. correlation) which determines the matching quality of the warped and the reference image. Standard optimization techniques are used to maximize the similarity measure. The successive refinement of the grid results in a non-rigid registration of each image to the references image, yielding vector fields of local displacements which reflect the movement of the cells at each time step.

The vector fields are used for derivation of several parameters describing the movement of the muscle cells. By detecting points of return of the movement direction parameters such as frequency and phase shift of contraction can be derived. The vector field divergence can be calculated to provide a measure that detects changes in the density of the displacement vector field, i.e. expansion and relaxation of muscle cells.

Thus, the main feature of the invention is the recording of movement images and the analysis thereof for a quantitative determination of at least one parameter describing the dynamic behaviour of the muscle cells.

The method of the present invention allows to determine the contractility of cardiomyocytes in a cell culture. The measuring is not restricted to individual cardiomyocytes, but allows for a measuring in a group of cells. No special cell culture dishes with electrodes are required. The method determines the actual movement behaviour of the cardiomyocytes. It needs no addition of dyes and is non-invasive, i.e. the cells are not influenced by the method. No animals have to be killed. No complicated preparation of the analyzed samples is required. The method allows for an automated analysis of cell cultures and is thus suited for performing test series with a high throughput.

### BRIEF DESCRIPTION OF THE DRAWINGS

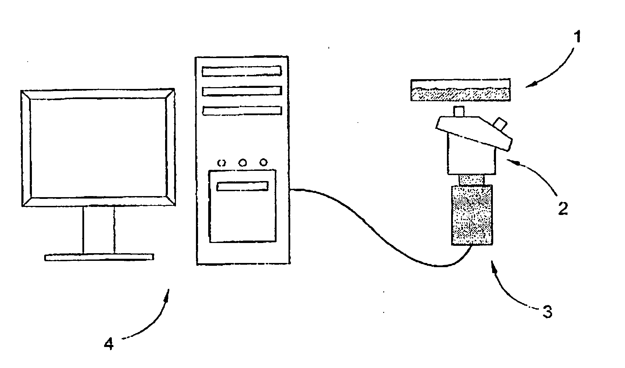

The following is a description of the invention with reference to the drawing for the case that the contracting cells are cardiomyocytes, wherein the drawing shows a test structure for optically determining the dynamic behaviour of contracting muscle cells.

### DESCRIPTION OF PREFERRED EMBODIMENT

In the embodiment, the optical determination of the dynamic behaviour of the cell culture of contracting cardiomyocytes is performed according to the following steps:
- cell cultures with contracting cardiomyocytes are recorded under a microscope 2 using a video camera 3,
- video sequences of the contracting cardiomyocytes recorded by the video camera 3 are supplied to a computer (image processor) 4, a software analyzes the movement of the cardiomyocytes in the video sequences and determines a displacement vector for each image element and each time step of the video sequence, the displacement vector describing the movement of the image content in the image element,
- at least one parameter describing the dynamic behaviour of the cardiomyocytes is quantitatively determined from the displacement vectors, this parameter being, in particular, the contraction rate, the amplitude of the displacement and/or the contractility.

Cardiomyocytes are differentiated from stem cells and are cultured in a cell culture dish 1. A microscope 2 is connected to a video camera 3 which supplies the video image to a computer 4. The contracting cardiomyocytes are recorded by the video camera 3 for a determined period of time and the video data are stored on the computer 4.

A reference image is selected from the video data and each single recorded image is geometrically aligned with the reference image using a non-rigid registration method. Thus, a local displacement vector field of the individual image elements is calculated for each video image. This field describes the movement state of the cardiomyocytes at any moment.

The moments of the beginning of the contraction phase and of the maximum excursion are determined for each image element in the sequence of displacement vectors. Thereafter, the parameters of the contraction rate and the amplitude of displacement can be calculated.

Contractility, i.e, the force with which the cardiomyocytes contract, is determined as another parameter of the dynamic behaviour of the cardiomyocytes. For each image element, the vector field divergence of the displacement vector field between the moment of the beginning of a contraction phase and the moment of maximum excursion is calculated. By adding these divergences, the contractility is obtained.

Although the invention has been described and illustrated with reference to specific illustrative embodiments thereof, it is not intended that the invention be limited to those illustrative embodiments. Those skilled in the art will recognize that variations and modifications can be made without departing from the true scope of the invention as defined by the claims that follow.

## Claims

1. A method for optically determining the dynamic behaviour of contracting cardiomyocytes in a cell culture, wherein
- a video sequence of the contracting cardiomyocytes is made using a video camera (3),
- an image processing unit (4) is used to calculate a displacement vector for each image element and each time step of the video sequence, said vector describing the movement of the image content in the image element, and
- at least one parameter describing the dynamic behaviour of the cardiomyocytes is determined from the displacement vectors.

2. The method of claim 1, wherein at least one parameter describes the contraction rate, the amplitude of the displacement or the contractility.

3. The method of claim 1 or 2, wherein the displacement vectors are determined using non-rigid image registration methods.

4. The method of one of claims 1 to 3, wherein moments of the reversal of the direction of movement are determined from the displacement vectors.

5. The method of one of claims 1 to 4, wherein a parameter describing contractility is calculated from the vector field divergence of the displacement vectors.

## Patentansprüche

1. Verfahren zum optischen Bestimmen des dynamischen Verhaltens von kontrahierenden Cardiomyozyten in einer Zellkultur, wobei
- eine Videosequenz der kontrahierenden Cardiomyozyten mittels einer Videokamera (3) erstellt wird,
- eine Bildverarbeitungseinheit (4) zum Berechnen eines Verschiebungsvektors für jedes Bildelement und jeden Zeitschritt der Videosequenz verwendet wird, wobei der Vektor die Bewegung des Bildinhalts in dem Bildelement beschreibt, und
- mindestens ein Parameter, welcher das dynamische Verhalten der Cardiomyozyten beschreibt, aus den Verschiebungsvektoren ermittelt wird.

2. Verfahren nach Anspruch 1, bei dem mindestens ein Parameter die Kontraktionsrate, die Amplitude der Verschiebung oder die Kontraktilität beschreibt.

3. Verfahren nach Anspruch 1 oder 2, bei dem die Verschiebungsvektoren unter Verwendung nicht-starrer Bildregistrierungsverfahren bestimmt werden.

4. Verfahren nach einer der Ansprüche 1 bis 3, bei dem Zeitpunkte der Umkehr der Bewegungsrichtung anhand der Verschiebungsvektoren bestimmt werden.

5. Verfahren nach einem der Ansprüche 1 bis 4, bei dem ein Parameter, welcher die Kontraktilität beschreibt, anhand der Vektorfelddivergenz der Verschiebungsvektoren berechnet wird.

## Revendications

1. Procédé de détermination optique du comportement dynamique de cardiomyocytes contractantes dans une culture cellulaire, dans lequel procédé
- on fait une séquence vidéo des cardiomyocytes contractantes, utilisant une vidéocaméra (3),
- on utilise une unité de traitement de données (4) pour calculer un vecteur de déplacement pour chaque élément d'image et chaque étape chronologique de la séquence vidéo, ledit vecteur décrivant le mouvement du contenu de l'image dans l'élément d'image, et
- on détermine, à partir des vecteurs de déplacement, au moins un paramètre décrivant le comportement dynamique des cardiomyocytes.

2. Procédé selon la revendication 1, dans lequel au moins un paramètre décrit le taux de contraction, l'amplitude de déplacement ou la contractilité.

3. Procédé selon la revendication 1 ou 2, dans lequel les vecteurs de déplacement sont déterminés par l'utilisation de procédés de registration d'images non-rigides.

4. Procédé selon une des revendications 1 à 3, dans lequel des moment de l'inversion de la direction de mouvement sont déterminés à partir de vecteurs de déplacement.

5. Procédé selon une des revendications 1 à 4, dans lequel un paramètre décrivant la contractilité est calculé par la divergence du champ vecteur des vecteurs de déplacement.
